(19) Europäisches Patentamt
European Patent Office
Office européen des brevets

(11) Veröffentlichungsnummer: **0 066 235 A2**

(12) # EUROPÄISCHE PATENTANMELDUNG

(21) Anmeldenummer: 82104547.3

(22) Anmeldetag: 25.05.82

(51) Int. Cl.3: **C 09 B 67/22**
C 09 B 67/46, C 09 B 29/085
D 06 P 1/18

(30) Priorität: 29.05.81 DE 3121320

(43) Veröffentlichungstag der Anmeldung: 08.12.82 Patentblatt 82/49

(84) Benannte Vertragsstaaten: CH DE FR GB IT LI

(71) Anmelder: HOECHST AKTIENGESELLSCHAFT
Postfach 80 03 20
D-6230 Frankfurt/Main 80(DE)

(72) Erfinder: Hähnle, Reinhard, Dr.
Kastanienweg 7a
D-6240 Königstein/Taunus(DE)

(72) Erfinder: Opitz, Konrad, Dr.
Schwedenstrasse 22
D-6237 Liederbach(DE)

(72) Erfinder: Kosubek, Uwe
Am Vogelanger 28
D-6087 Büttelborn(DE)

(54) **Neue Färbepräparationen, Verfahren zu deren Herstellung und deren Verwendung zum Färben und Bedrucken von synthetischen Fasermaterialien.**

(57) Färbepräparationen, deren Farbstoffanteil eine Mischung von Farbstoffen der allgemeinen Formel (1)

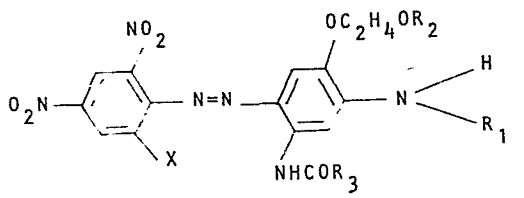

(1)

ist, in welcher X ein Chlor- oder Bromatom, $R_1$ ein Wasserstoffatom oder eine Alkylgruppe mit 1-4 Kohlenstoffatomen, und $R_2$ und $R_3$ unabhängig voneinander eine Methyl- oder Äthylgruppe bedeuten, deren Herstellung, indem man diazotiertes 2,4-Dinitro-6-chloranilin oder diazotiertes 2,4-Dinitro-6-bromanilin oder eine Mischung dieser Diazoniumverbindungen mit einer Mischung von Kupplungskomponenten der allgemeinen Formel (2)

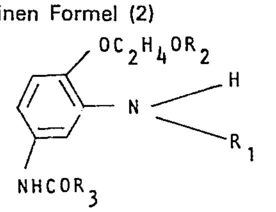

(2)

in welcher $R_1$ ein Wasserstoffatom oder eine Alkylgruppe mit 1-4 Kohlenstoffatomen, und $R_2$ und $R_3$ unabhängig voneinander eine Methyl- oder Äthylgruppe bedeuten, kuppelt, und deren Verwendung zum Färben oder Bedrucken von synthetischen Fasermaterialien.

EP 0 066 235 A2

Croydon Printing Company Ltd

HOECHST AKTIENGESELLSCHAFT HOE 81/F 132 Dr.MÜ/Wa

Neue Färbepräparationen, Verfahren zu deren Herstellung und deren Verwendung zum Färben und Bedrucken von synthetischen Fasermaterialien

Gegenstand der vorliegenden Erfindung sind neue Färbepräparationen, deren Farbstoffanteil eine Mischung von Farbstoffen der allgemeinen Formel (1)

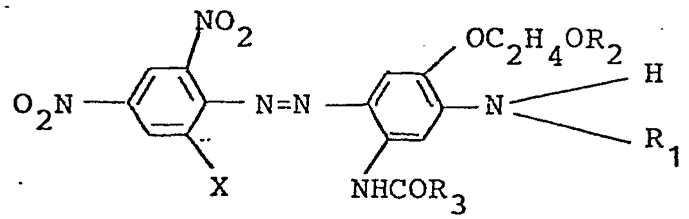

(1)

ist, in welcher X ein Chlor-oder Bromatom, $R_1$ ein Wasserstoffatom oder eine Alkylgruppe mit 1-4 Kohlenstoffatomen, und $R_2$ und $R_3$ unabhängig voneinander eine Methyl- oder Äthylgruppe bedeuten, sowie Verfahren zu deren Herstellung und deren Verwendung zum Färben oder Bedrucken von synthetischen Fasermaterialien.
Es wurde gefunden, daß Färbepräparationen, deren Farbstoffanteil aus einer Mischung von Farbstoffen der vorstehend genannten allgemeinen Formel (1) besteht, Färbeflotten mit sehr guten färberischen Eigenschaften ergeben. Insbesondere zeigen damit hergestellte Färbungen auf Wickelkörpern, zum Beispiel auf Kreuzspulen, keine Ablagerungen von Farbstoff auf der Ware. Außerdem zeigen sie einen sehr guten Farbaufbau und eine geringe Reduktionsempfindlichkeit und ihre Empfindlichkeit gegenüber Temperaturschwankungen beim Färben ist gering. Die erfindungsgemäßen Färbepräparationen eignen sich für Schnellfärbeverfahren und zum Anfärben des Polyesteranteils in Fasermischungen.

Die Herstellung der für die Färbepräparationen benötigten Farbstoffmischungen erfolgt in an sich bekannter Weise durch Kuppeln von diazotiertem 2,4-Dinitro-6-chloranilin oder von diazotiertem 2,4-Dinitro-6-bromanilin oder einer

Mischung dieser beiden Diazoniumverbindungen mit einer Mischung von Kupplungskomponenten der allgemeinen Formel (2)

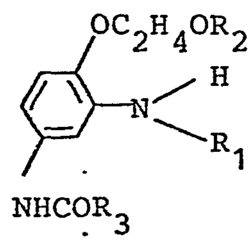

(2)

in welcher $R_1$ ein Wasserstoffatom oder eine Alkylgruppe mit 1 bis 4 Kohlenstoffatomen, und $R_2$ und $R_3$ unabhängig voneinander eine Methyl- oder Äthylgruppe bedeuten, in saurer, wäßriger Lösung.

Die Herstellung von Färbepräparationen aus den Farbstoffmischungen erfolgt durch Naßmahlung der Farbstoffmischungen mit Dispergiermitteln, beispielsweise mit Ligninsulfonaten. Ein anderer Weg zur Herstellung der neuen Färbepräparationen ist, die getrennt hergestellten Farbstoffe mit Dispergiermitteln einer Naßmahlung zu unterwerfen, wobei die Mischung während, vor oder nach dem Mahlvorgang erfolgen kann.

Synthetische Fasermaterialien, die mit den erfindungemäßen Färbepräparationen gefärbt oder bedruckt werden können, sind beispielsweise Polyamid-, Cellulose-$2\frac{1}{2}$-acetat-, Cellulosetriacetat- und insbesondere Polyesterfasermaterialien. Als zum Färben oder Bedrucken mit den erfindungsgemäßen Färbepräparationen in Frage kommende Fasermischungen sind beispielsweise Mischungen aus Polyesterfasern und Wolle oder Mischungen aus Polyesterfasern und Baumwolle.

Die zur Herstellung der Färbepräparationen verwendeten Farbstoffe sind bekannt aus der belgischen Patentschrift Nr. 634032, aus der deutschen Patentschrift Nr. 2736785 und aus der deutschen Patentschrift Nr. 2833854.

Beispiel 1

217,5 Gewichtsteile 2,4-Dinitro-6-chloranilin werden in 1000 Gewichtsteile 96 %ige Schwefelsäure eingetragen und unter Rühren gelöst. Anschließend läßt man 320 Gewichtsteile 40 %ige Nitrosylschwefelsäure zulaufen, wobei man mittels Außenkühlung die Temperatur bei 30-35°C hält. Dann rührt man zwei Stunden bei 30-35°C. Nach Ablauf dieser Zeit ist die Diazotierung beendet. Die so erhaltene Diazoniumsalzlösung läßt man innerhalb von 60 Minuten zu einer gerührten Mischung aus 4000 Gewichtsteilen Wasser, 6000 Gewichtsteilen Eis, 1000 Gewichtsteilen Eisessig, 87 Gewichtsteilen 2-Äthylamino-4-propionylamino-1-ß-methoxy-äthoxybenzol, 17 Gewichtsteilen 2-Amino-4-propionyl-amino-1-ß-methoxy-äthoxybenzol, 165 Gewichtsteilen 2-Äthylamino-4-acetylamino-1-ß-methoxy-äthoxybenzol und 32 Gewichtsteilen 2-Amino-4-acetamino-1-ß-methoxyäthoxybenzol laufen. Die Temperatur soll dabei +5°C nicht übersteigen, was durch Zugabe von weiterem Eis erreicht wird. Man rührt 3 Stunden nach, filtriert die gebildete Farbstoffmischung ab und wäscht mit Wasser säurefrei. Man erhält ca. 1100 Gewichtsteile Filterkuchen, der 390 Gewichtsteile Farbstoffgemisch enthält.

Der erhaltene Filterkuchen wird mit 400 Gewichtsteilen ligninsulfonsaurem Natrium und 200 Gewichtsteilen Wasser angeteigt und homogenisiert. Anschließend wird auf einer Perlmühle gemahlen, bis die Feinverteilung einwandfrei ist. Unter Verwendung von 900 Gewichtsteilen Wasser wird die Färbepräparation von den Perlen getrennt und auf 2600 Gewichtsteile eingestellt. Die erhaltene Färbepräparation ist gießbar und ergibt nach Einarbeitung in Färbeflotten, Klotzflotten oder Druckpasten auf Polyesterfasermaterialien egale Färbungen oder Drucke mit sehr guten Echtheiten, insbesondere mit sehr guter Reibechtheit. Die Färbepräparation eignet sich besonders für Schnellfärbeverfahren. Die Färbungen zeigen einen sehr guten Farbaufbau.

Der Farbstoffanteil der Färbepräparation ist 15 % insgesamt und setzt sich wie folgt zusammen:

Farbstoff der Formel

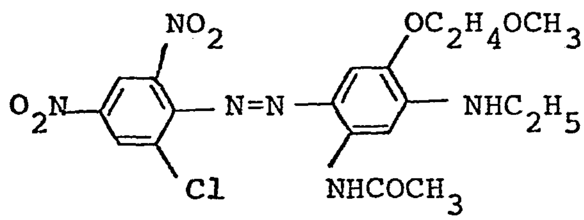

55 %,

Farbstoff der Formel

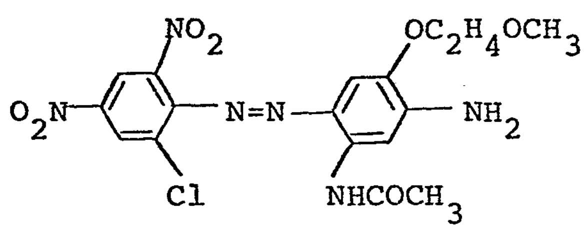

12 %,

Farbstoff der Formel

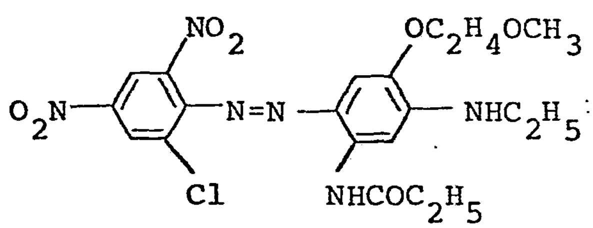

27 % und

Farbstoff der Formel

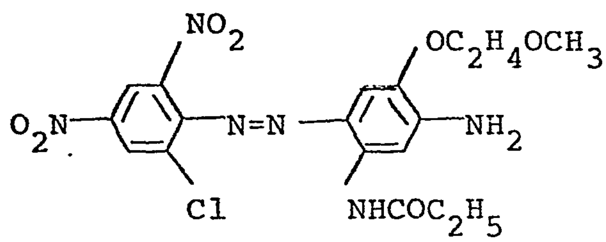

6 %.

Verwendet man zur Herstellung der Farbstoffmischung statt 217,5 Gewichtsteilen 2,4-Dinitro-6-chloranilin eine Mischung von 108,75 Gewichtsteilen 2,4-Dinitro-6-chloranilin mit 131 Gewichtsteilen 2,4-Dinitro-6-bromanilin und verfährt im übrigen in gleicher Weise, so erhält man auch eine Färbepräparation mit sehr guten färberischen Eigenschaften. Der Farbstoffanteil dieser Färbepräparation setzt sich aus acht Farbstoffen zusammen.

Beispiel 2

150 Gewichtsteile Farbstoff der Formel

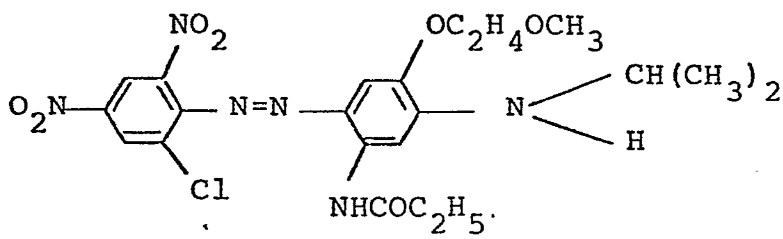

und

150 Gewichtsteile Farbstoff der Formel

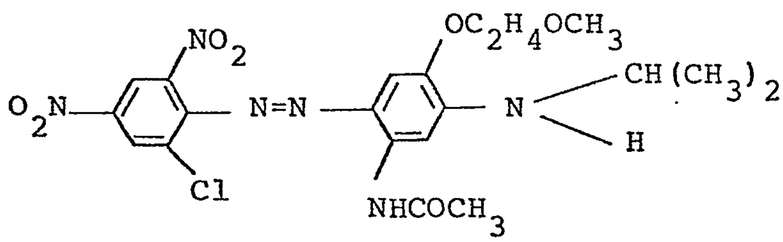

sowie 450 Gewichtsteile eines Kondensationsproduktes aus m-Kresol, Formaldehyd und Natriumbisulfit werden mit 800 Gewichtsteilen Wasser angeteigt und homogenisiert. Anschließend wird in einer Perlmühle gemahlen, bis die Feinverteilung gut ist. Der entstandene Mahlteig wird sprühgetrocknet und durch Zugabe von weiterem Dispergiermittel, beispielsweise von Natriumligninsulfonat, auf einen Farbstoffgehalt von 35 % eingestellt. Die erhaltene Färbepräparation ergibt Färbeflotten mit sehr guten färberischen Eigenschaften, beispielsweise mit einem sehr guten Farbaufbau. Die Färbepräparation eignet

sich besonders für Schnellfärbeverfahren. Die erhaltenen blauen Färbungen auf Polyester- oder Polyamidfasermaterialien zeichnen sich durch sehr gute Egalität aus und besitzen sehr gute Echtheiten, insbesondere eine sehr gute Reibechtheit.

Weitere erfindungsgemäße Färbepräparationen enthalten folgende Farbstoffmischungen. (Die Prozentangaben beziehen sich auf den Farbstoffanteil der Färbepräparationen).

Beispiel 3

Eine Färbepräparation, deren Farbstoffanteil sich wie folgt zusammensetzt:

43 % Farbstoff der Formel

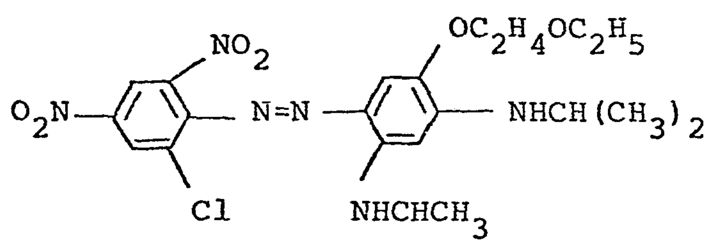

,

7 % Farbstoff der Formel

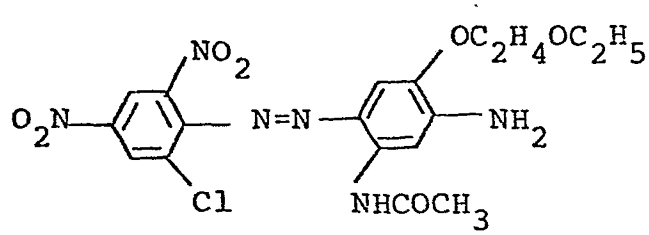

,

43 % Farbstoff der Formel

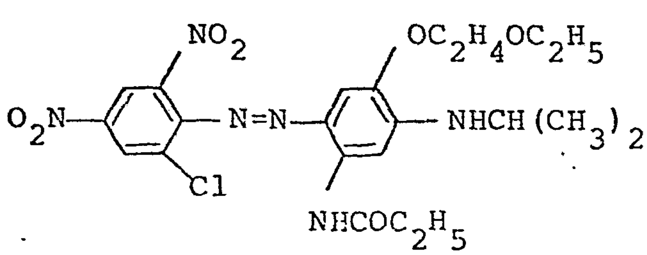

und

7 % Farbstoff der Formel

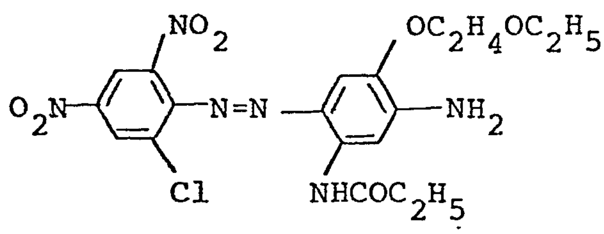

Beispiel 4

Eine Färbepräparation, deren Farbstoffanteil sich wie folgt zusammensetzt:

60 % Farbstoff der Formel

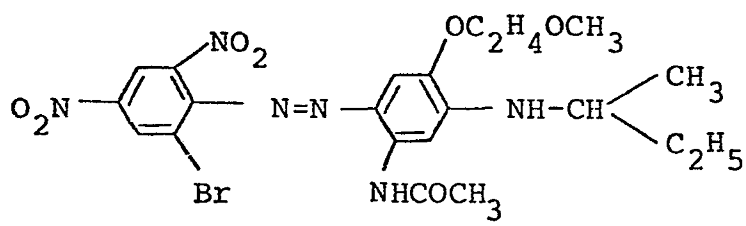

und

40 % Farbstoff der Formel

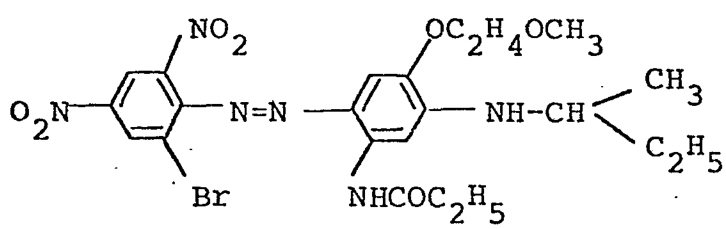

Beispiel 5

Eine Färbepräparation, deren Farbstoffanteil sich wie folgt zusammensetzt:

85 % Farbstoff der Formel

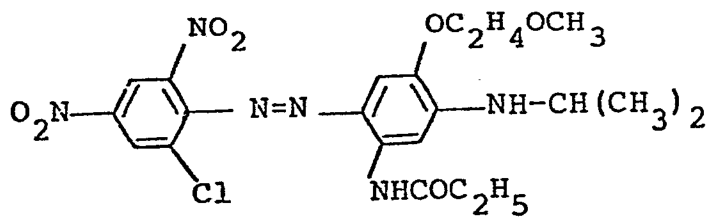

und

15 % Farbstoff der Formel

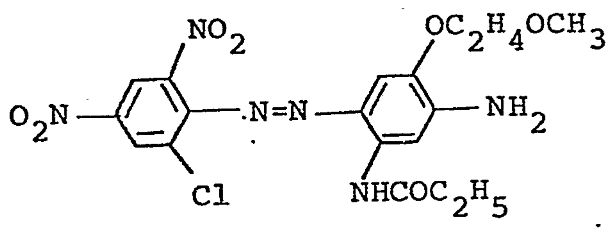

## Beispiel 6

Eine Färbepräparation, deren Farbstoffanteil sich wie folgt zusammensetzt:

42 % Farbstoff der Formel

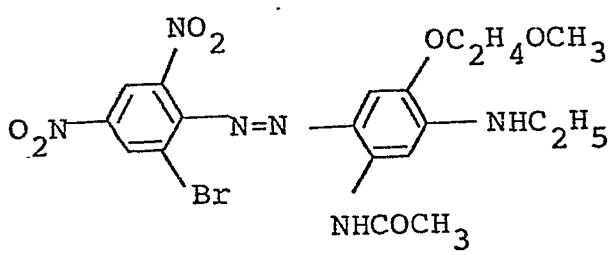

,

8 % Farbstoff der Formel

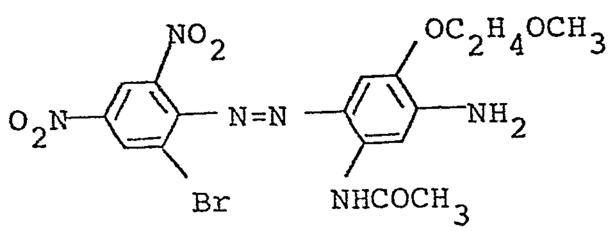

,

42 % Farbstoff der Formel

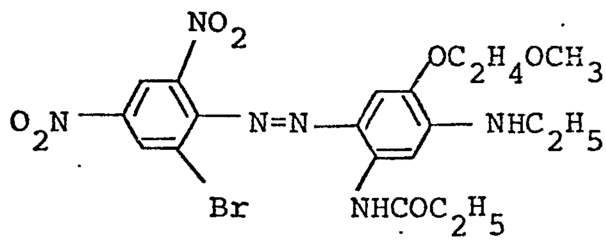

und

8 % Farbstoff der Formel

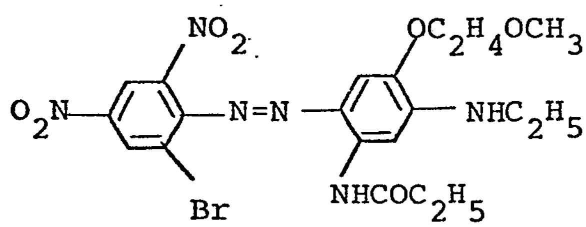

PATENTANSPRÜCHE:

1. Färbepräparationen, deren Farbstoffanteil eine Mischung von Farbstoffen der allgemeinen Formel (1)

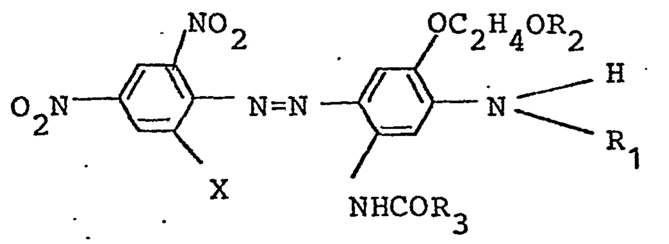

(1)

ist, in welcher X ein Chlor- oder Bromatom, $R_1$ ein Wasserstoffatom oder eine Alkylgruppe mit 1-4 Kohlenstoffatomen, und $R_2$ und $R_3$ unabhängig voneinander eine Methyl- oder Äthylgruppe bedeuten.

2. Färbepräparationen, deren Farbstoffanteil zu 10 bis 90 % der Farbstoff der Formel

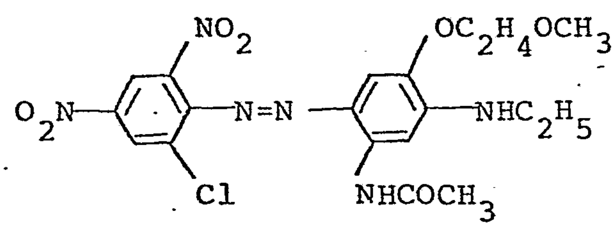

,

zu 10 bis 90 % der Farbstoff der Formel

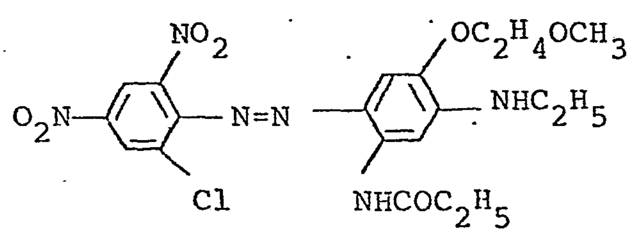

,

zu 0 bis 30 % der Farbstoff der Formel

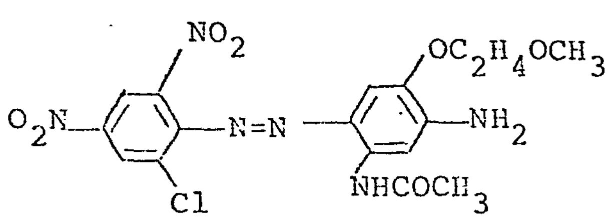

und zu 0 bis 30 % der Farbstoff der Formel

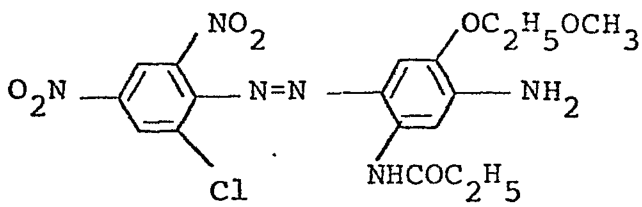

ist.

3. Herstellung von Farbstoffmischungen gemäß Anspruch 1, dadurch gekennzeichnet, daß man diazotiertes 2,4-Dinitro-6-chloranilin oder diazotiertes 2,4-Dinitro-6-bromanilin oder eine Mischung dieser Diazoniumverbindungen mit einer Mischung von Kupplungskomponenten der allgemeinen Formel (2)

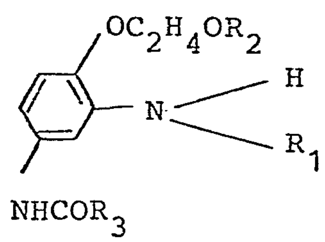
, (2)

in welcher $R_1$ ein Wasserstoffatom oder eine Alkylgruppe mit 1-4 Kohlenstoffatomen, und $R_2$ und $R_3$ unabhängig voneinander eine Methyl- oder Äthylgruppe bedeuten, kuppelt.

4. Herstellung von Färbepräparationen gemäß Anspruch 1 oder 2, dadurch gekennzeichnet, daß man mehrere Farbstoffe der allgemeinen Formel (1) zusammen mit Dispergiermitteln einem Mahlvorgang unterwirft.

5. Verwendung von Färbepräparationen gemäß Anspruch 1 oder 2 zum Färben oder Bedrucken von synthetischen Fasermaterialien.